# DEMANDE DE BREVET EUROPEEN

(11) **EP 2 361 730 A1**
(43) Date de publication de la demande: **31.08.2011**
(21) Numéro de dépôt: 11155734.4
(22) Date de dépôt: 24.02.2011
(51) Int. Cl.: B25C 5/06, B25C 5/11, B25C 5/16

(54) **Outil de pose d'agrafes de fixation**

(30) Priorité: 25.02.2010 FR 1051355
(71) Demandeur: Chappuis, Fabrice Philippe Thierry, 01350 Culoz (FR)
(72) Inventeur: Chappuis, Fabrice Philippe Thierry, 01350 Culoz (FR)
(74) Mandataire: Myon, Gérard Jean-Pierre

(57) **Abrégé**

Cet outil (2) de pose d'agrafes (4) de fixation de tubes ou de câbles sur une structure porteuse, notamment de tubes (T) de circulation de fluide caloporteur ou de câbles chauffants sur des dalles (D), comprend un corps de guidage (22) définissant un canal d'éjection d'agrafes (4), un piston mobile en translation dans le corps de guidage et apte à pousser une agrafe, dans le canal d'éjection, vers une ouverture de sortie du canal d'éjection, des moyens (26) de commande du piston en translation et un guide (32) d'amenée des agrafes (4) dans le canal d'éjection, à travers une ouverture latérale du corps de guidage. Cet outil comprend, en outre, un réservoir multicompartiment (42) définissant au moins deux compartiments (C₁-C₂) de stockage d'agrafes (4). Ce réservoir multicompartiment est mobile (F₂) en rotation, autour d'un axe (A₄₂) parallèle à un axe (Z-Z') de déplacement du piston dans le corps de guidage (22) et par rapport à un support (36) solidaire du corps de guidage, au moins entre une première position, où un premier compartiment (C₁) du réservoir est en regard d'une ouverture (364) ménagée dans le support, dans le prolongement du guide (32), et une deuxième position où un deuxième compartiment (C₂) du réservoir multicompartiment est en regard de l'ouverture. Le support (36) constitue le fond du ou des compartiments (C₃, C₄) qui ne sont pas en regard de l'ouverture (364).

## Description

L'invention a trait à un outil de pose d'agrafes de fixation de tubes ou de câbles sur une structure porteuse, notamment de tubes de circulation de fluide caloporteur ou de câbles chauffants sur les dalles isolantes.

Dans le domaine de l'installation de systèmes de chauffage au sol, il est connu d'installer des tubes de circulation de fluide caloporteur sur des dalles isolantes réalisées en polyuréthane ou en polystyrène. Une fois mis en place, ces tubes ou ces câbles doivent être fixés sur ces dalles, avant que soit coulée une chape recouvrant ces tubes ou ces câbles. Pour réaliser cette immobilisation des tubes ou des câbles sur les dalles, il est connu d'utiliser des agrafes en matériau synthétique globalement en forme de U et dont les branches sont pourvues de pointes en harpon permettant leur accrochage dans une dalle. Des outils de poses de telles agrafes sont connus, par exemple, de DE-A-31 29 818 ou de DE-U-88 07934.

Ces matériels connus permettent aux poseurs de répartir des agrafes sur la longueur d'un tube de circulation de fluide caloporteur, sans avoir à se baisser pour la pose de chaque agrafe. Dans ces matériels connus, les agrafes glissent sous l'effet de la gravité, le long d'un guide courbe qui les amène en regard d'un piston manoeuvré par une tige d'actionnement, à l'intérieur d'un corps de guidage. Une réserve d'agrafes est constituée par une tige qui s'étend au-dessus du guide. Or, il est d'usage d'utiliser quatre agrafes par mètre linéaire de tube posé, ce qui induit une consommation importante d'agrafes. Il en résulte que l'utilisateur doit interrompre souvent ses opérations de pose d'agrafes pour recharger son outil, ce qui le force à ressortir de la pièce dans laquelle il est en train de travailler pour récupérer des agrafes en quantité suffisante. La perte de temps sur chaque chantier peut ainsi être considérable.

C'est à ces inconvénients qu'entend plus particulièrement remédier l'invention en proposant un nouvel outil de pose d'agrafes de fixation qui nécessite, lors de son utilisation, moins d'interruptions que les matériels connus.

A cet effet, l'invention concerne un outil de pose d'agrafes de fixation de tubes ou de câbles sur une structure porteuse, notamment de tubes de circulation de fluide caloporteur ou des câbles chauffants sur des dalles, cet outil comprenant:
- un corps de guidage définissant un canal d'éjection d'agrafes,
- un piston mobile en translation dans le corps de guidage et apte à pousser une agrafe, dans le canal d'éjection, vers une ouverture de sortie de ce canal,
- des moyens de commande du piston en translation,
- un guide d'amenée d'agrafes dans le canal d'éjection, à travers une ouverture latérale du corps de guidage.

Cet outil est caractérisé en ce qu'il comprend un réservoir multicompartiment définissant au moins deux compartiments de stockage d'agrafes, ce réservoir multicompartiment étant mobile en rotation, autour d'un axe parallèle à un axe de déplacement du piston dans le corps de guidage et par rapport à un support solidaire du corps de guidage, au moins entre une première position, où un premier compartiment du réservoir est en regard d'une ouverture ménagée dans le support, dans le prolongement du guide, et une deuxième position où un deuxième compartiment de ce réservoir est en regard de l'ouverture, alors que le support constitue le fond du ou des compartiments qui ne sont pas en regard de l'ouverture.

Grâce à l'invention, le réservoir multicompartiment peut être chargé avec une quantité d'agrafes largement supérieure à celles habituellement utilisées avec les matériels connus. Lorsqu'il a consommé les agrafes situées dans un premier compartiment du réservoir, l'utilisateur peut faire tourner ce réservoir pour amener un deuxième compartiment en regard de l'ouverture du support et alimenter à travers elle le guide d'amenée des agrafes vers le canal d'éjection, sans avoir à aller chercher de nouvelles agrafes ou devoir les transporter sur lui. Le caractère rotatif du réservoir multicompartiment le rend particulièrement simple à utiliser, de façon intuitive, alors que le fait que le support constitue le fond du ou des compartiments qui ne sont pas en regard de l'ouverture garantit que les agrafes présentes dans ce ou ces compartiments ne risquent pas d'être égarées.

Selon des aspects avantageux mais non obligatoires de l'invention, un tel outil peut incorporer une ou plusieurs des caractéristiques suivantes prises dans toutes combinaisons techniquement admissibles :
- Le guide d'amenée des agrafes dans le canal d'éjection est formé par deux bandes dont l'écartement est réglable, selon une direction perpendiculaire à une direction de circulation des agrafes le long du guide. Ceci permet d'adapter la configuration du guide aux dimensions des agrafes utilisées avec l'outil. Avantageusement, chaque bande est montée sur le corps de guidage avec une possibilité de réglage, selon une direction perpendiculaire à un axe de translation du piston dans ce corps et perpendiculaire à la direction de circulation des agrafes le long du guide.
- Le guide est solidaire du support, au voisinage de l'ouverture ménagée dans le support.
- L'outil comprend des moyens d'arrêt en rotation du réservoir par rapport au support, dans une position où l'un des compartiments du réservoir multicompartiment est en regard de l'ouverture ménagée dans le support. Ceci évite une rotation intempestive du réservoir multicompartiment en cours d'utilisation des agrafes situées dans l'un des compartiments.
- L'outil comprend un moyen d'alignement d'une face latérale d'une agrafe engagée dans le canal d'éjection avec une face latérale du piston tournée vers le guide. Ceci permet de faire fonctionner l'outil avec des agrafes d'épaisseurs variables. Ce moyen d'alignement comprend avantageusement une butée réglable montée dans une paroi du corps de guidage opposée à l'ouverture latérale par laquelle les agrafes pénètrent dans le canal d'éjection.
- Chaque compartiment a une capacité d'au moins cinquante agrafes, de préférence au moins soixante quinze agrafes, de préférence encore au moins cent agrafes.
- Le support est une plaque plane fixée sur le corps de guidage et perpendiculaire à l'axe de translation du piston, alors que des renforts s'étendent entre la plaque formant support et le corps de guidage.
- Les moyens de commande du piston en translation comprennent une tige d'actionnement, alors qu'une entretoise pourvue d'une ouverture de passage de la tige d'actionnement est solidaire d'une extrémité du réservoir multicompartiment qui est opposé au support. Ceci assure le positionnement du réservoir multicompartiment par rapport de l'outil.

L'invention sera mieux comprise et d'autres avantages de celle-ci apparaitront plus clairement à la lumière de la description qui va suivre de plusieurs modes de réalisation d'un outil conforme à son principe, donnée uniquement à titre d'exemple et faite en référence aux dessins dans lesquels :
- la figure 1 est une vue en perspective d'un outil conforme à l'invention en cours d'utilisation pour la pose d'agrafes de fixation de tubes de circulation de fluide caloporteur sur des dalles isolantes ;
- la figure 2 est une vue de côté de l'outil de la figure 1 vide;
- la figure 3 est une vue de dessus de l'outil de la figure 1, des agrafes étant représentées en place dans les compartiments du réservoir de l'outil ;
- la figure 4 est une vue partielle en perspective de deux pièces de l'outil des figures 1 à 3 ;
- la figure 5 est une vue partielle, en perspective et avec arrachement partiel, de l'outil des figures 1 à 4 une unique agrafe étant en place sur le guide;
- la figure 6 est une coupe dans le plan Vl à la figure 5 ;
- la figure 7 est une représentation schématique de principe, en vue de dessus du réservoir à agrafes et d'une plaque-support d'un outil conforme à un deuxième mode de réalisation de l'invention ;
- la figure 8 est une représentation analogue à la figure 7 pour un outil conforme à un troisième mode de réalisation de l'invention ;
- la figure 9 est une vue analogue à la figure 7 pour un outil conforme à un quatrième mode de réalisation de l'invention ;
- la figure 10 est une vue de côté, comparable à la figure 2 mais à plus petite échelle, pour un outil conforme à un cinquième mode de réalisation de l'invention ;
- la figure 11 est une vue de dessus du réservoir et de la plaque-support de l'outil de la figure 10 ;
- la figure 12 est une vue analogue à la figure 11 pour un outil conforme à un sixième mode de réalisation de l'invention ;
- la figure 13 est une vue analogue à la figure 11 pour un outil conforme à un septième mode de réalisation de l'invention ; et
- la figure 14 est une vue analogue à la figure 10 pour un outil conforme à un huitième mode de réalisation de l'invention.

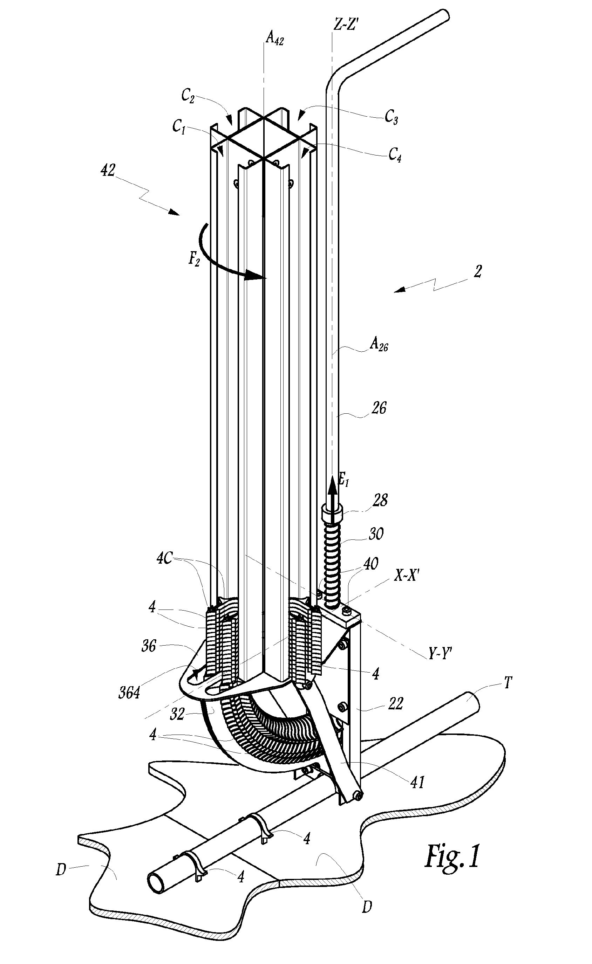

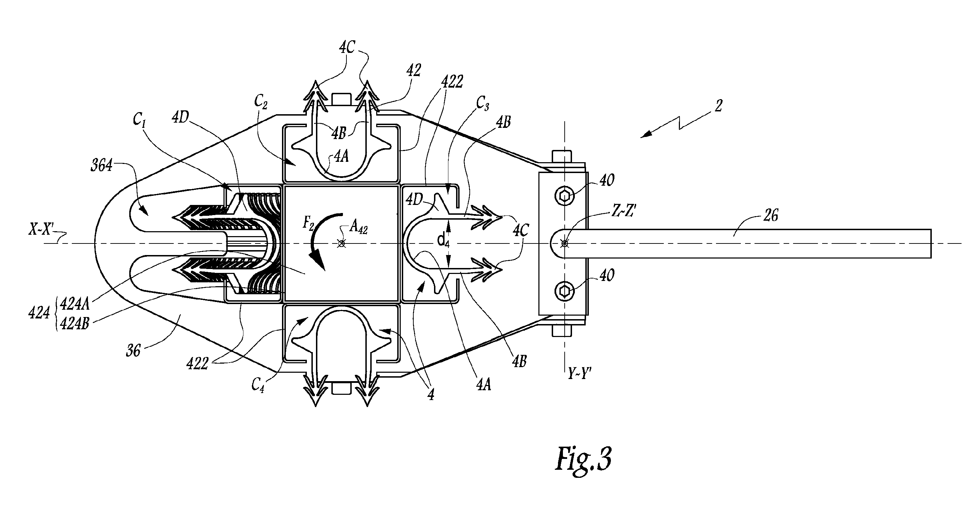

L'outil 2 représenté aux figures 1 à 6 est destiné à la pose d'agrafes 4 permettant d'immobiliser un tube T appartenant à un système de chauffage sur des dalles D en polyuréthane ou en polystyrène. Le tube T peut être en matériau synthétique, par exemple en polyéthylène. Les agrafes 4 ont globalement une forme de U avec des branches 4B terminées par des pointes en harpon 4C, comme cela ressort plus clairement de la figure 3.

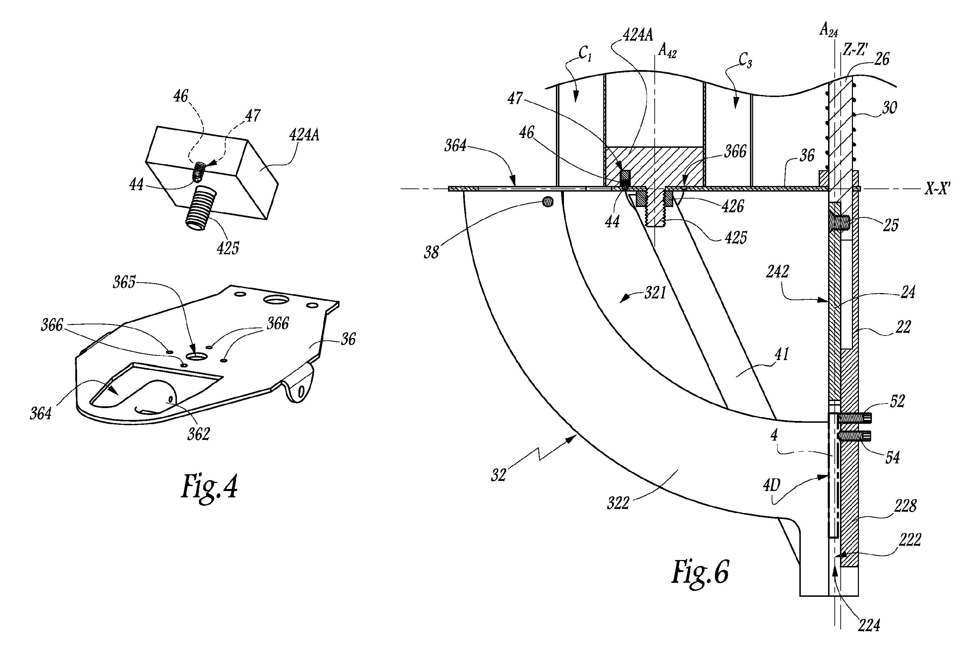

L'outil 2 comprend un corps de guidage 22 dans lequel coulisse un piston 24, parallèlement à un axe Z-Z' qui est vertical en configuration d'utilisation de l'outil 2. Le piston 24, qui est en partie visible par arrachement à la figure 4, est fixé par une vis 25 sur une tige 26 sur laquelle est immobilisée une bague 28 et autour de laquelle est monté un ressort 30 qui exerce sur cette bague un effort élastique E₁ dirigé à l'opposé du piston 24. L'axe Z-Z' est confondu avec l'axe longitudinal A₂₆ de la partie rectiligne de la tige 26.

Le corps de guidage 22 délimite un canal d'éjection 222 dans lequel sont successivement admises les agrafes 4 à utiliser pour immobiliser un tube T sur les dalles D. Le canal d'éjection 222 se termine par une ouverture de sortie 224 ménagée une partie basse du corps de guidage 22.

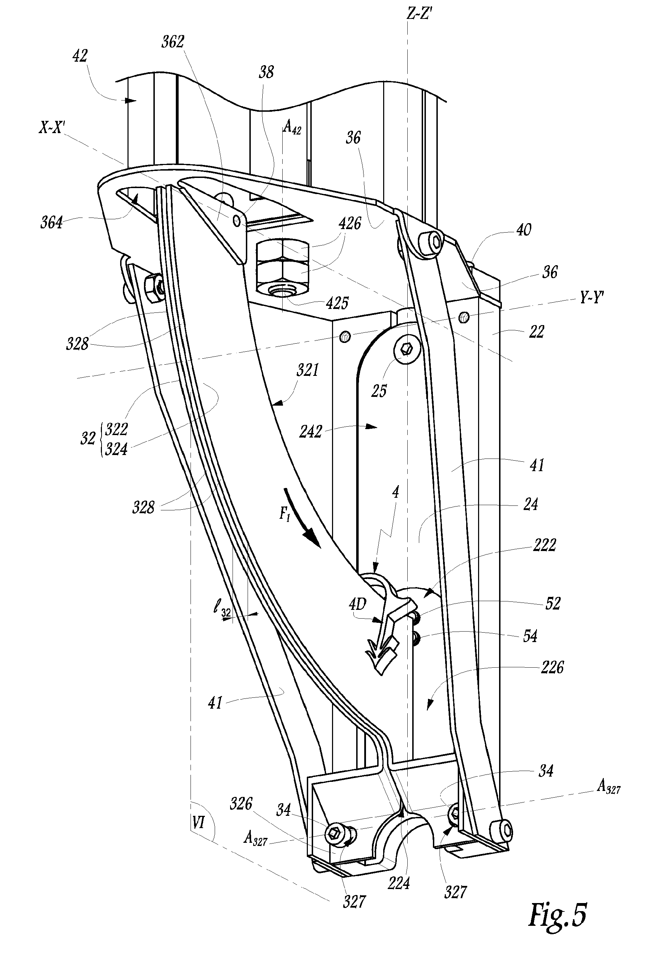

Une plaque d'habillage 229 isole le piston 24 et le canal 222 de l'extérieur du corps 22. Cette plaque n'est pas représentée aux figures 5 et 6, pour la clarté du dessin.

Un guide 32 d'amenée des agrafes 4 vers le canal d'éjection 222 est formé par deux bandes de métal 322 et 324 qui sont pliées de façon à constituer chacune une patte 326 de fixation sur le corps 22 ainsi qu'une partie plane 328 présentant une configuration arquée.

Les deux parties planes 328 des deux bandes 322 et 324 sont disposées parallèlement l'une à l'autre et forment ensemble un bord 321 du guide 32 qui est destiné à être coiffé par des agrafes 4, comme représenté schématiquement à la figure 1, et à la figure 5 pour une seule agrafe. Sous l'effet de la gravité, les agrafes 4 s'écoulent en appui sur le bord 321 formé par les bandes 322 et 324, dans le sens de la flèche F₁ de sorte qu'elles pénètrent dans le canal 222 par une ouverture latérale 226 ménagée sur le côté du corps 22 visible à la figure 5.

Les bandes 322 et 324 sont montées sur le corps 22 au moyen de vis 34 qui traversent des ouvertures oblongues 327 dont les axes longitudinaux A₃₂₇ sont perpendiculaires à l'axe Z-Z' et à la direction de circulation des agrafes 4 sur le guide 32 qui est représenté par la flèche F₁. Le caractère oblong des ouvertures 327 permet d'ajuster la largeur *ℓ*₃₂ du guide 32 prise entre les surfaces opposées des parties 328 des bandes 322 et 324, parallèlement aux axes longitudinaux A₃₂₇ des ouvertures 327. Il est ainsi possible d'adapter la largeur *ℓ*₃₂ du guide 322 à la largeur des agrafes 4, c'est-à-dire à la distance d₄ entre les branches 42 des agrafes dans une partie courante.

Le guide 32 est solidaire d'une plaque 36 à laquelle il est relié par une vis 38 qui est représentée par son trait d'axe à la figure 5 et qui traverse au moins un voile 362 de la plaque 36, ainsi que les extrémités des parties 328 des bandes 322 et 324 opposées aux pattes 326.

La plaque 36 est par ailleurs fixée en partie supérieure du corps de guidage 22 par des vis 40, alors que des renforts 41 s'étendent entre la plaque 36 et le bas du corps 22, au voisinage de l'ouverture 224. Les renforts 41 soutiennent la plaque 36 en porte-à-faux par rapport au corps de guidage 22.

On note X-X' un axe perpendiculaire à l'axe Z-Z' et aux pattes 326. On note Y-Y' un axe perpendiculaire aux axes X-X' et Z-Z'. La plaque 36 est parallèle aux axes X-X' et Y-Y'. Les parties 328 des bandes 322 et 324 sont pratiquement parallèles au plan défini par les axes X-X' et Z-Z', au fait près que ces bandes peuvent être inclinées par rapport à ce plan, en fonction de la position des vis 34 dans les lumières 327.

La plaque 36 est pourvue d'une ouverture 364 globalement en forme de U et adaptée au passage des agrafes 4 à travers la plaque 36. L'ouverture 364 est située dans le prolongement du guide 32, au dessus de celui-ci en configuration d'utilisation de l'outil 2 représentée à la figure 1.

Un réservoir multicompartiment 42 est monté sur la plaque 36, avec possibilité de rotation autour d'un axe A₄₂ parallèle à l'axe Z-Z'. Ainsi, la plaque 36 forme un support pour le réservoir 42, lequel est mobile en rotation par rapport à cette plaque.

Comme il ressort plus particulièrement de la figure 3, le réservoir 42 est formé par l'assemblage de quatre cornières 422 sur un noyau 424 en l'occurrence formé d'un carré massif 424A et d'une bague à section carrée 424B. Le carré 424A est monté au centre des cornières 422, en partie basse du réservoir 42, c'est-à-dire au voisinage de la plaque 36. La bague 424B est montée au centre des cornières 422 au voisinage de l'extrémité supérieure du réservoir 42, c'est-à-dire à l'opposé de la plaque 36. Le carré 424A porte une tige filetée 425 qui est engagée dans un orifice 365 de la plaque 36 et qui y est maintenu grâce à deux écrous 426, un seul écrou étant représenté à la figure 6, pour la clarté du dessin. En configuration montée de l'outil 2, la tige 425 et l'orifice 365 sont centrés sur l'axe A₄₂.

Chaque cornière 422 définit un compartiment et, comme le nombre de cornières 422 est de quatre, quatre compartiments C₁, C₂, C₃ et C₄ sont définis. Chaque compartiment peut recevoir la base 4A et le début des branches 4B d'une série d'agrafes 4 empilées. En pratique, chaque compartiment C₁ à C₄ est prévu pour recevoir plus de cinquante agrafes, de préférence plus de soixante quinze agrafes. On peut prévoir que chaque compartiment C₁ à C₄ peut recevoir plus de cent agrafes, de sorte que le réservoir 42 permet d'accommoder au total plus de quatre cents agrafes 4.

Les agrafes 4 sont réalisées en matériau synthétique, par exemple en polyamide et reliées ensemble, au niveau de leurs bases 4A respectives, de sorte qu'elles constituent des bandes qui peuvent être manipulées en une opération pour charger chaque compartiment C₁ à C₄ avec le nombre adéquat d'agrafes 4.

La position de l'axe d'articulation A₄₂ du réservoir 42 par rapport à la plaque 36 est choisie de telle sorte que chaque compartiment C₁ à C₄ peut être amené à son tour en position au-dessus de l'ouverture 364 de la plaque 36, en faisant tourner le réservoir 42 autour de l'axe A₄₂, ce qui permet de laisser glisser les agrafes 4 stockées dans ce compartiment à travers l'ouverture 364 sur le guide 32, sous l'effort de la gravité, en vue d'amener ces agrafes 4 vers le canal 222, à travers l'ouverture 226.

Aux figures 1 à 6, le compartiment C₁ est en regard de l'ouverture 364.

La plaque 36 constitue, pour chacun des compartiments C₂ à C₄ qui ne sont pas en regard de l'ouverture 364, un fond sur lequel reposent les agrafes 4 qui sont ainsi efficacement retenues dans ces compartiments.

Lorsque toutes les agrafes 4 préalablement stockées dans un compartiment, par exemple le compartiment C₁, ont été consommées, il est possible de faire tourner le réservoir 42, dans le sens de la flèche F₂, c'est-à-dire autour de l'axe A₄₂, pour amener le réservoir suivant C₂ en regard de l'ouverture 364, ce qui permet de continuer à alimenter le guide 32 et le canal 222, sans avoir à recharger l'outil 2.

Comme il ressort plus particulièrement de la figure 4, la plaque 36 est pourvue de quatre empreintes 366 destinées à recevoir partiellement une bille 44 montée dans le bloc 424A et chargée élastiquement par un ressort 46 disposé dans un insert 47 immobilisé dans le carré massif 424A.

Les éléments 44, 46 et 366 constituent des moyens d'arrêt du réservoir 42 en rotation autour de l'axe A₄₂ dans des positions successives où l'un des compartiments C₁ à C₄ est en regard de l'ouverture 364. On évite ainsi une rotation intempestive du réservoir 42 lorsque les agrafes 4 de l'un de ses réservoirs C₁ à C₄ sont en cours de déversement vers le guide 32.

En variante, le bloc 424A peut être équipé de plusieurs billes d'arrêt, équivalentes à la bille 44, chargées par des ressorts équivalents au ressort 46.

D'autres moyens d'arrêt en rotation du réservoir 42 dans une position où l'un de ses réservoirs C₁ à C₄ est aligné avec l'ouverture 364 peuvent être envisagés. Il peut s'agir de languettes prévues sur le réservoir 42 ou sur la plaque 36 qui coopèrent avec des butées prévues sur la plaque 36 ou sur le réservoir 42. En variante, un loquet peut également être envisagé.

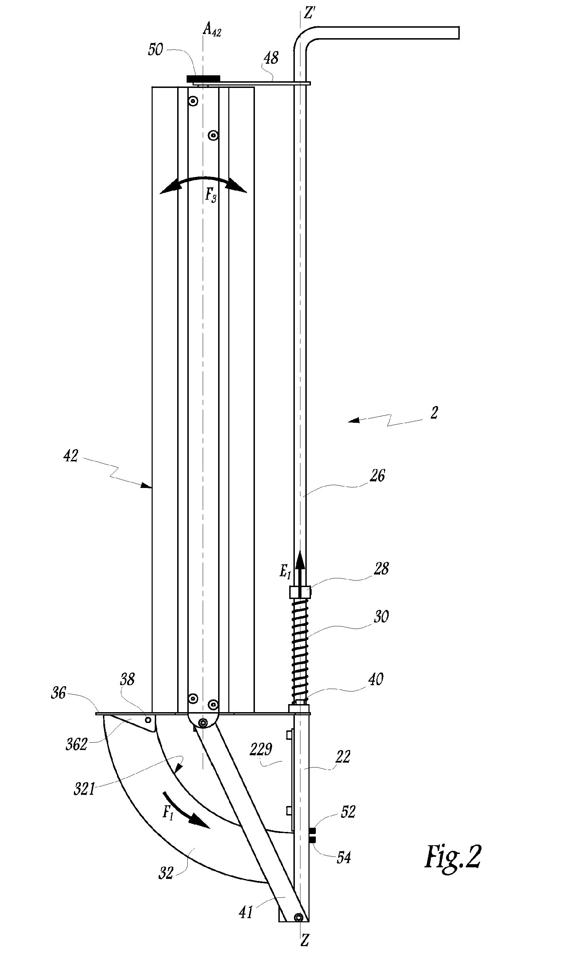

Selon un aspect de l'invention représenté uniquement à la figure 2 pour la clarté du dessin, une entretoise 48 est montée entre le réservoir 42 et la tige 26. Cette entretoise est pourvue d'une ouverture de passage de la tige 36, qui ne gêne pas le déplacement de cette tige parallèlement à l'axe Z-Z', alors qu'elle est rendue solidaire de la bague 424B au moyen d'une molette 50. On évite ainsi les risques de basculement du réservoir 42 dans le sens de la double flèche F₃ à la figure 2. Le serrage de la molette 50 sur une butée non représentée peut également permettre d'immobiliser le réservoir 42 en rotation autour de l'axe A₄₂, ce serrage ayant une fonction comparable à celle de la bille 44 et des empreintes 366 mentionnées ci-dessus.

Comme il ressort plus particulièrement de la figure 6, une vis 52 traverse la paroi 228 du corps 22 opposée à l'ouverture 226. Cette vis débouche dans le canal d'éjection 222. Cette vis reçoit en butée chaque agrafe 4 poussée par les autres agrafes 4 présentes sur le guide 32.

A la figure 6, une agrafe 4 est représentée en fantôme dans le canal d'éjection 222, prête à être poussée par le piston 24. On note 4D la face latérale de cette agrafe tournée vers le guide 32. Cette face latérale est celle qui est visible aux figures 3 et 5 pour les agrafes 4 qui y sont représentées.

On note par ailleurs A₂₄ un axe central du piston 24, c'est-à-dire un axe selon lequel s'exerce la résultante de l'effort de poussée du piston 24 sur une agrafe 4 en place dans le canal 222. L'axe A₂₄ est parallèle à l'axe Z-Z' et le piston 24 se déplace selon cet axe, sous l'action de la tige 26.

On note 242 la face latérale du piston 24 tournée vers le guide 32, cette face 242 étant normalement recouverte par la plaque d'habillage 229. La face 242 est parallèle aux axes A₂₄ et Y-Y'.

Pour éviter les risques de coincement d'une agrafe dans le canal 222, il importe d'aligner, autant que faire se peut, l'agrafe 4, représentée en traits fantôme à la figure 6 et qui est prête à être éjectée, avec le piston 24. Plus précisément, il convient d'aligner les faces 242 et 4D. Pour ce faire, la vis 52 sert de butée à une agrafe 4 qui vient de quitter le guide 32 et qui n'est pas encore soumise à l'effort de poussée exercée par le piston 24. Le fait que la vis 52 peut être plus ou moins vissée dans la paroi 228 permet d'ajuster la position de butée d'une telle agrafe 4 prête à être éjectée par l'ouverture 226 et, ainsi d'aligner la surface 4D de cette agrafe sur la surface 242 du piston pour différentes épaisseurs d'agrafes.

Il convient de noter que la vis 52 formant butée est indépendante d'un pointeau 54 qui traverse également la paroi 228 et qui permet de retenir temporairement l'agrafe 4 qui est éventuellement désolidarisée des autres agrafes et qui est en débord du guide 32, avant que celle-ci ne soit éjectée à travers l'ouverture 226 par le piston 24.

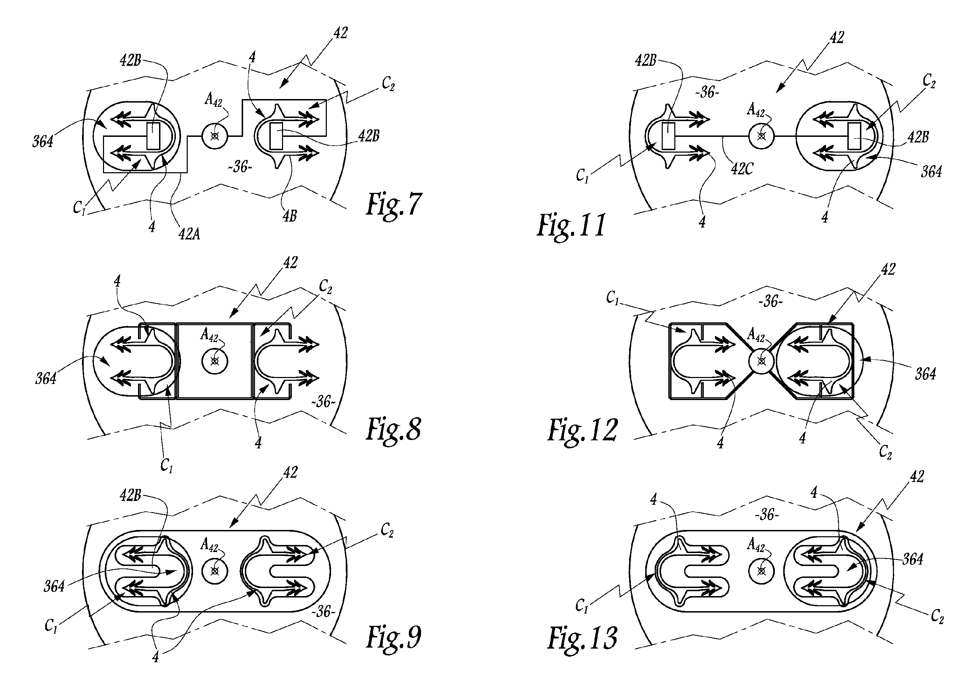

L'invention n'est pas limitée à un réservoir multicompartiment équipé de quatre compartiments, comme représenté aux figures 1 à 6. En effet, comme représenté aux figures 7 et suivantes, où les éléments analogues à ceux des figures 1 à 6 portent les mêmes références, un réservoir 42 avec seulement deux compartiments C₁ et C₂ peut être envisagé. En variante, plus de quatre compartiments peuvent être prévus.

Comme montré à la figure 7, ce réservoir peut être réalisé par pliage d'un flan de tôle 42A et ajout de baguettes 42B logées entre les branches 4B des agrafes 4.

Dans le cas où les agrafes 4 sont pourvues de languettes à proximité de leur fond, la géométrie représentée à la figure 8 peut être utilisée, avec un réservoir 42 à deux compartiments C₁ et C₂ obtenus soit par assemblage de profilés métalliques ou en matériau de synthèse, soit par extrusion.

Il est même envisageable d'utiliser un réservoir 42 de forme oblongue, comme représenté à la figure 9, dont la structure peut être pleine, semi-pleine ou alvéolaire. Ce réservoir peut être en métal ou en matériau de synthèse.

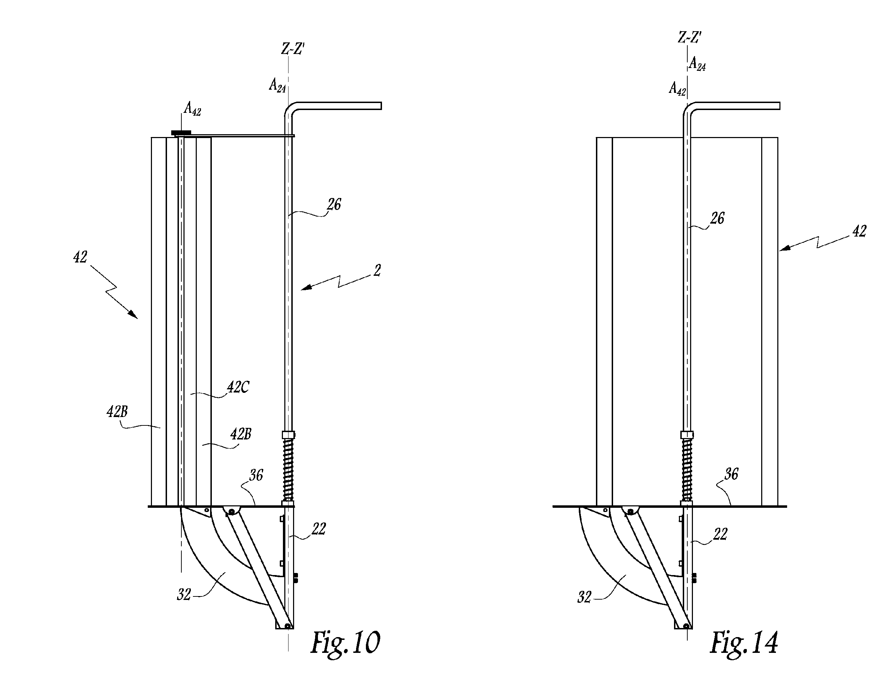

Comme représentés aux figures 10 et 11, l'axe de rotation A₄₂ du réservoir 42 peut être situé non pas entre la tige 26 et l'extrémité supérieure du guide 32 mais au-delà de cette extrémité par rapport à la tige 26. Dans ce cas, le réservoir 42 peut avoir la géométrie représentée à la figure 11. Les compartiments C₁ et C₂ sont ici formés autour de baguettes 42B montées sur les bords d'une plaque de métal 42C qui constitue l'âme du réservoir 42.

Comme représenté aux figures 12 et 13, d'autres géométries du réservoir 42 peuvent être envisagées, selon des approches comparables, respectivement à celles des figures 8 et 9. Le réservoir 42 de la figure 12 est formé soit par pliage et assemblage de profilés métalliques ou en matériau de synthèse, soit par extrusion. Le réservoir 42 de la figure 13 est oblong, avec des parois supérieure et inférieure pleines.

Comme représenté à la figure 14, l'axe de rotation A₄₂ du réservoir 42 peut être confondu avec l'axe de translation du A₂₄ du piston, non visible sur la figure 14, l'axe A₂₄ étant confondu avec l'axe Z-Z' et matérialisé par la tige 26. Le réservoir 42 peut avoir une géométrie comparable à celles envisagées pour les quatre premiers modes de réalisation, avec des dimensions transversales plus importantes.

L'invention est représentée sur les figures lors de son utilisation pour la fixation d'un tube de circulation de fluide caloporteur. L'outil 2 peut également servir à la fixation d'un câble électrique chauffant par effet Joule. Un tel câble est, par exemple, réalisé en cuivre.

## Revendications

1. Outil (2) de pose d'agrafes (4) de fixation de tubes ou de câbles sur une structure porteuse, notamment de tubes (T) de circulation de fluide caloporteur ou de câbles chauffants sur des dalles (D), comprenant :
- un corps de guidage (22) définissant un canal (222) d'éjection d'agrafes,
- un piston (24) mobile en translation dans le corps de guidage et apte à pousser une agrafe, dans le canal d'éjection, vers une ouverture (224) de sortie du canal d'éjection,
- des moyens (26) de commande du piston en translation,
- un guide (32) d'amenée d'agrafes dans le canal d'éjection, à travers une
ouverture latérale du corps de guidage,
**caractérisé en ce que** cet outil comprend un réservoir multicompartiment (42) définissant au moins deux compartiments (C₁-C₂) de stockage d'agrafes, **en ce que** ce réservoir multicompartiment est mobile (F₂) en rotation, autour d'un axe (A₄₂) parallèle à un axe (A₂₄) de déplacement du piston (24) dans le corps de guidage (22) et par rapport à un support (36) solidaire du corps de guidage, au moins entre une première position, où un premier compartiment (C₁) du réservoir est en regard d'une ouverture (364) ménagée dans le support, dans le prolongement du guide (32), et une deuxième position où un deuxième compartiment (C₂) du réservoir multicompartiment est en regard de l'ouverture, et **en ce que** le support (36) constitue le fond du ou des compartiments (C₃, C₄) qui ne sont pas en regard de l'ouverture (364).

2. Outil selon la revendication 1, **caractérisé en ce que** le guide (32) est formé par deux bandes (322, 324) dont l'écartement est réglable (*ℓ*₃₂) selon une direction perpendiculaire à une direction de circulation des agrafes le long du guide.

3. Outil selon la revendication 2, **caractérisé en ce que** chaque bande (322, 324) est montée sur le corps de guidage (22) avec une possibilité de réglage, selon une direction (A₃₂₇) perpendiculaire à un axe (A₂₄) de translation du piston (24) dans le corps de guidage (2) et perpendiculaire à la direction de circulation (F₁) des agrafes (4) le long du guide (32).

4. Outil selon l'une des revendications précédentes, **caractérisé en ce que** le guide (32) est solidaire du support (36), au voisinage de l'ouverture (364) ménagée dans le support.

5. Outil selon l'une des revendications précédentes, **caractérisé en ce qu'**il comprend des moyens (44, 46, 366) d'arrêt en rotation du réservoir (42) par rapport au support (36), dans une position où l'un (C₁) des compartiments (C₁-C₄) du réservoir multicompartiment est en regard de l'ouverture (364) ménagée dans le support.

6. Outil selon l'une des revendications précédentes, **caractérisé en ce qu'**il comprend un moyen (52) d'alignement d'une face latérale (4D) d'une agrafe (4) engagée dans le canal d'éjection (222) avec une face latérale (242) du piston (24) tournée vers le guide (32).

7. Outil selon la revendication 6, **caractérisé en ce que** le moyen d'alignement comprend une butée réglable (52) montée dans une paroi (228) du corps de guidage (22) opposée à l'ouverture latérale (226).

8. Outil selon l'une des revendications précédentes, **caractérisé en ce que** chaque compartiment (C₁-C₄) a une capacité d'au moins cinquante agrafes, de préférence au moins soixante quinze agrafes, de préférence encore au moins cent agrafes.

9. Outil selon l'une des revendications précédentes, **caractérisé en ce que** le support (36) est une plaque plane fixée sur le corps de guidage (22) et perpendiculaire à l'axe (A₂₄) de translation du piston (24) et **en ce que** des renforts (41) s'étendent entre la plaque (36) formant support et le corps de guidage (22).

10. Outil selon l'une des revendications précédentes, **caractérisé en ce que** les moyens de commande du piston (24) en translation comprennent une tige d'actionnement (26) et **en ce qu'**une entretoise (48) pourvue d'une ouverture de passage de la tige d'actionnement est solidaire d'une extrémité (424B) du réservoir multicompartiment (42) opposée au support (36).
